# FASCICULE DE BREVET EUROPEEN

(11) **EP 1 418 015 B1**
(45) Date de publication et mention de la délivrance du brevet: **19.04.2006**
(21) Numéro de dépôt: 03292672.7
(22) Date de dépôt: 27.10.2003
(51) Int. Cl.: B23C 3/35, B23Q 17/22, B23Q 35/22

(54) **Procédé et dispositif de réglage d'une machine à reproduire les clés**
Verfahren und Vorrichtung zum Einstellen einer Maschine zur Schlüsselreproduktion
Method and device for setting a machine reproducing keys

(30) Priorité: 07.11.2002 FR 0213937
(43) Date de publication de la demande: 12.05.2004
(73) Titulaire: Jma France, 78300 Poissy (FR)
(72) Inventeur: Bau, Claudio, 78200 Magnanville (FR); Antelo, Miguel Angel, Aretxabaleta (Gipuzkoa) (ES)
(74) Mandataire: Kaspar, Jean-Georges

(56) Documents cités:
- FR-A- 2 306 043
- US-A- 4 426 179

## Description

L'invention est relative à un procédé de réglage d'une machine à reproduire les clés, en particulier de réglage de l'ensemble palpeur de la clé à reproduire.

L'invention est également relative à un dispositif de réglage d'une machine à reproduire les clés, en particulier de réglage de l'ensemble palpeur de la clé à reproduire.

Le document FR 2 306 043 décrit un dispositif de signalisation pour le positionnement dans une machine à reproduire, d'un palpeur et d'un outil d'usinage tel qu'une fraise, respectivement par rapport au modèle et à l'ébauche de la pièce à usiner, en particulier dans une machine à reproduire les clés. Dans les machines de ce genre, la fraise doit être amenée par rapport à la pièce à usiner exactement dans la même position que le palpeur par rapport au modèle et ce réglage doit être corrigé au fur et à mesure de l'usure de l'outil qui est plus rapide que celle du palpeur, afin de conserver l'identité de la profondeur d'usinage des pièces usinées avec la profondeur du profil du modèle.

Le dispositif du document FR 2 306 043 comporte un circuit électrique comprenant une source de courant et un voyant, et dans lequel deux pièces étalons représentent le modèle et la pièce à usiner, recouvertes d'un revêtement isolant sur tous leurs côtés sauf celui venant respectivement en contact avec le palpeur et la fraise, sont montés en série. Ce circuit électrique se ferme par la fraise et le palpeur, reliés entre eux par les organes électriquement conducteurs de la machine.

Le document US 4 426 179 décrit un système pour apprécier la précision de machines de reproduction de clés. Ce système est pourvu de deux plaques de détection identiques isolées électriquement et destinées chacune à être positionnée dans un étau de la machine de reproduction de clés.

L'état de la technique connu des documents FR 2 306 403 et US 4 426 179 présente des inconvénients liés au montage et à la conformation de l'outil ou de la fraise d'usinage de la clé à reproduire. En effet, la fraise d'usinage présente des dents de profondeur différente et est montée sur son axe de rotation avec un jeu fonctionnel entraînant une légère ovalisation de son mouvement de rotation. Ces deux facteurs expliquent l'imprécision des techniques décrites dans les documents FR 2 306 043 et US 4 426 179.

Un but de l'invention est de fournir un nouveau procédé et un nouveau dispositif de réglage d'une machine à reproduire les clés qui remédient aux inconvénients de la technique connue.

Un autre but de l'invention est d'obtenir un réglage d'une machine de reproduction de clés tenant compte de l'état réel de la fraise d'usinage.

L'invention a pour objet un procédé de réglage d'une machine à reproduire les clés, ladite machine à reproduire les clés comportant un ensemble palpeur et un ensemble d'usinage ou de fraisage, comportant les étapes de matérialisation de la profondeur d'usinage ou de fraisage dans une position prédéterminée de l'ensemble palpeur ; de comparaison de ladite profondeur matérialisée d'usinage ou de fraisage avec la position du palpeur ; et de mise en coïncidence de la position du palpeur avec cette profondeur matérialisée.

Selon d'autres caractéristiques alternatives de l'invention :
- l'étape de matérialisation de la profondeur d'usinage ou de fraisage est réalisée par usinage ou fraisage sur l'étau situé côté fraise pour constituer une clé calibre présentant une partie dégagée ;
- l'étape de comparaison de ladite profondeur matérialisée avec la position du palpeur est effectuée du côté palpeur, de préférence en utilisant l'étau de blocage de clé à reproduire situé côté palpeur ;
- l'étape de mise en coïncidence de la position du palpeur avec la profondeur matérialisée de fraisage ou d'usinage est effectuée avec utilisation d'un circuit électrique comportant un voyant lumineux indicateur de coïncidence ;
- la position prédéterminée de l'ensemble palpeur est obtenue par mise en butée d'une tige de blocage de l'ensemble palpeur ;
- la tige de blocage de l'ensemble palpeur est au moins partiellement électriquement conductrice et vient en butée sur une plaquette au moins partiellement électriquement conductrice ou un moyen de contact électrique équivalent.

L'invention a également pour objet un dispositif de réglage d'une machine à reproduire les clés, comportant des moyens de matérialisation de la profondeur d'usinage ou de fraisage, des moyens de comparaison de ladite profondeur matérialisée avec la position du palpeur de la machine de reproduction de clés, et des moyens de mise en coïncidence de la position du palpeur avec cette profondeur matérialisée.

Selon d'autres caractéristiques alternatives de l'invention :
- le dispositif comporte des moyens de blocage en position prédéterminée de l'ensemble palpeur de la machine de reproduction de clés ;
- le dispositif comporte des moyens indicateurs de la mise en coïncidence de la position du palpeur avec cette profondeur matérialisée ;
- les moyens indicateurs de la mise en coïncidence de la position du palpeur avec cette profondeur matérialisée comportent au moins un indicateur lumineux déclenché par contact électrique.

L'invention sera mieux comprise grâce à la description qui va suivre donnée à titre d'exemple non limitatif en référence aux dessins annexés dans lesquels :
- La figure 1 représente schématiquement une première étape de mise en oeuvre de l'invention.
- La figure 2 représente schématiquement une deuxième étape de mise en oeuvre de l'invention.
- La figure 3 représente schématiquement une autre deuxième étape de mise en oeuvre de l'invention.

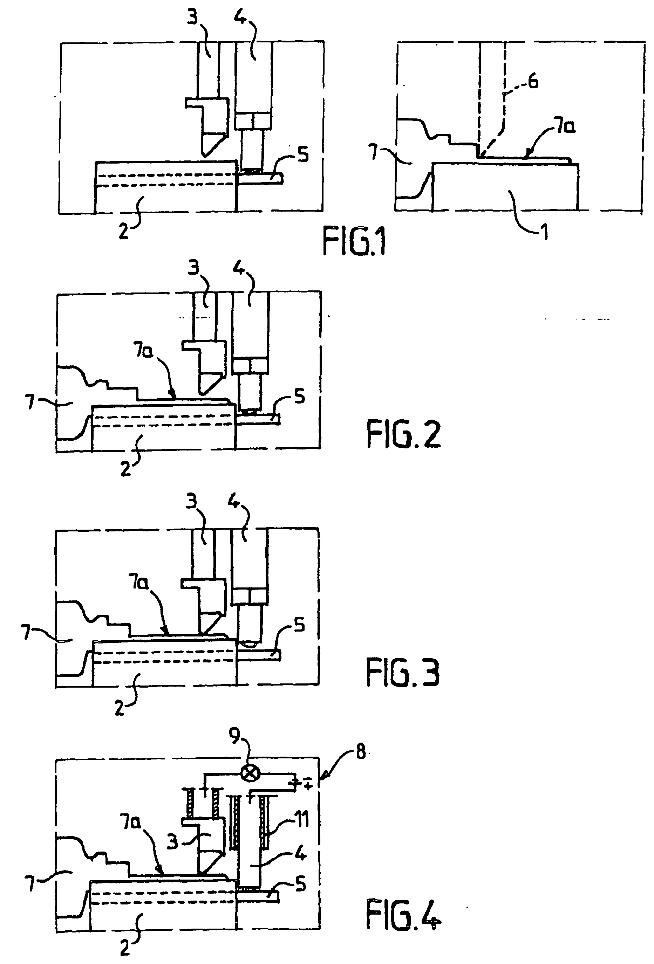

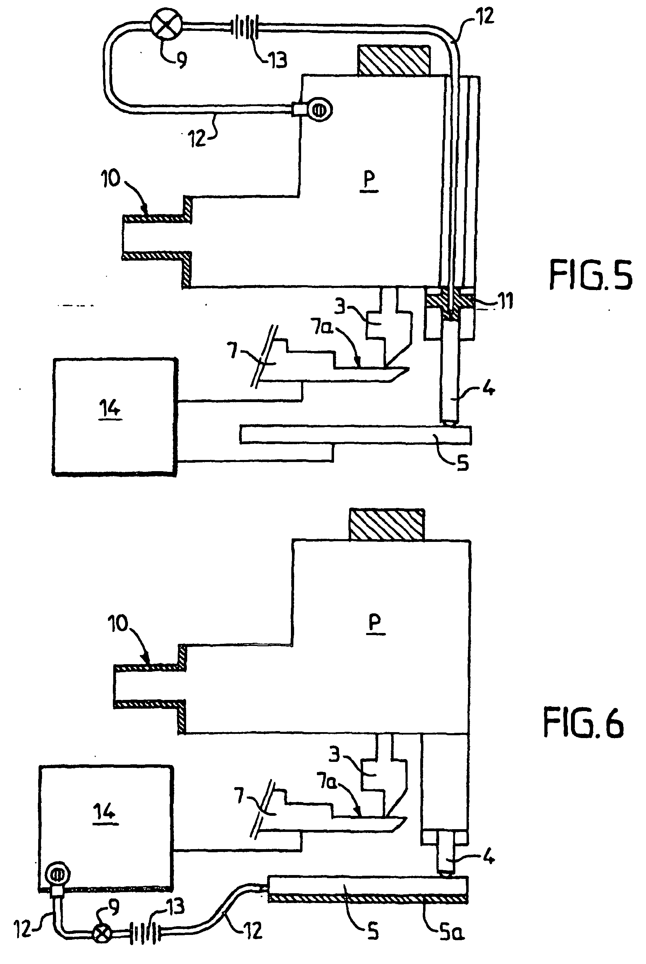

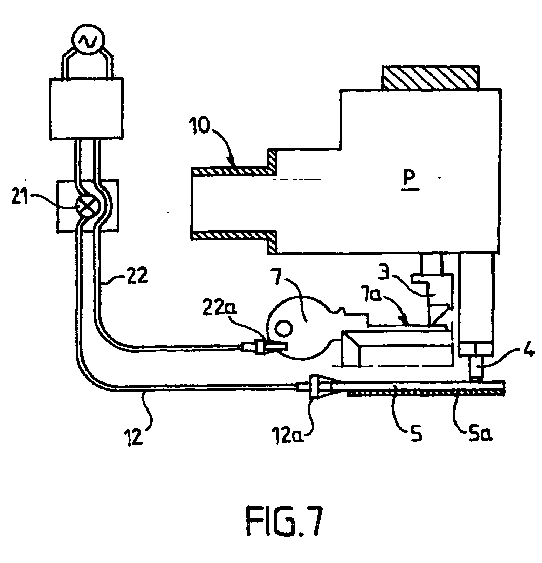

. La figure 4 représente schématiquement une troisième étape de mise en oeuvre de l'invention.
. La figure 5 représente partiellement et schématiquement un premier mode de réalisation de dispositif selon l'invention.
. La figure 6 représente partiellement et schématiquement un deuxième mode de réalisation de dispositif selon l'invention.
. La figure 7 représente partiellement et schématiquement un troisième mode de réalisation de dispositif selon l'invention.

En référence aux figures 1 à 4, un procédé de réglage d'une machine à reproduire les clés comporte plusieurs étapes successives.

Sur la figure 1, une machine à reproduire les clés est représentée partiellement par un étau 1 d'usinage situé côté fraise, un étau 2 de blocage de clé à reproduire situé côté palpeur, un palpeur 3 de clé à reproduire et une tige 4 de blocage du chariot portant les étaux 1 et 2.

L'étau 2 côté palpeur comporte ou maintient une plaquette 5.

Un ressort non représenté pousse le chariot en position de blocage en direction du palpeur 3, de la fraise 6 représentée en traits pointillés jusqu'à venir en butée contre la tige 4 de blocage.

On règle tout d'abord la tige 4 de blocage contre la plaquette 5, pour maintenir l'ensemble palpeur dans une position prédéterminée par rapport à l'étau 2 situé côté palpeur.

On règle ensuite le palpeur 3 pour que le palpeur 3 ne touche pas l'étau 2 et reste distant d'environ un millimètre de la partie supérieure de cet étau 2.

On bloque ensuite dans l'étau 1 une ébauche 7 de clé et on fraise cette ébauche 7 au moyen de la fraise 6 pour obtenir l'usinage 7a représenté à la figure 1. Ce fraisage 7a s'effectue ainsi dans la position décollée du palpeur 3 et correspond dans la position de maintien de l'ensemble palpeur dans une position prédéterminée.

Avec le chariot dans cette position, on fraise l'ébauche 7 de clé serrée dans l'étau 1 situé côté fraise ; et on repasse la fraise sur l'ébauche 7 de clé, de manière à matérialiser la profondeur de fraisage.

La clé ainsi usinée 7 est appelée par la suite « clé calibre 7 ».

Après l'étape de la figure 1, on a desserré la clé calibre 7 de l'étau 1 côté fraise et on l'a placée dans l'étau 2 côté palpeur pour la serrer dans cet étau 2.

On laisse alors revenir le chariot et, dans le cas où le palpeur 3 ne touche pas la partie fraisée 7a de la clé calibre 7, on se trouve dans la position de la figure 2.

Comme la tige 4 de blocage est en butée sur la plaquette 5, il est nécessaire de baisser le palpeur 3 pour venir au contact de la clé calibre 7 en sa partie fraisée 7a, jusqu'à la position de contact de la figure 4.

Selon un autre cas de positionnement, après avoir desserré la clé calibre 7 de l'étau 1 côté fraise pour la placer et la serrer dans l'étau 2 côté palpeur, et après avoir laissé revenir le chariot, on peut se trouver dans le cas où le palpeur 3 touche la partie fraisée 7a de la clé calibre 7, tandis que la tige 4 de blocage est décollée de la plaquette 5 : ce cas est représenté à la figure 3

Sur la figure 3, comme la tige 4 de blocage n'est pas en contact sur la plaquette 5, il est nécessaire de relever le palpeur 3 pour laisser la tige 4 de blocage venir en butée sur la plaquette 5, jusqu'à la position de contact de la figure 4.

Sur la figure 4, le réglage de la machine à reproduire les clés est exactement obtenu lorsque, simultanément, le palpeur 3 touche la partie fraisée 7a de la clé calibre 7 et la tige 4 de blocage touche la plaquette 5 solidaire de l'étau 2 côté palpeur.

Dans ce cas, le palpeur 3 est exactement situé sur la profondeur d'usinage de la fraise 6, car le palpeur 3 vient au contact de la partie 7a dégagée dans la clé calibre 7 par l'action de la fraise ou organe 6 d'usinage.

La détection de cette position simultanée dans laquelle, simultanément, le palpeur 3 touche la partie fraisée 7a de la clé calibre 7 et la tige 4 de blocage du chariot touche la plaquette 5 est difficile à réaliser à l'oeil nu ou avec des systèmes mécaniques de cales.

Cette opération de précision est facilitée par l'utilisation d'un circuit 8 électrique avec un voyant indicateur 9 lumineux.

On décrit maintenant en référence aux figures 5 à 7 plusieurs modes de réalisation de dispositif selon l'invention se distinguant l'un de l'autre par leur circuit électrique de détection de cette position simultanée.

Sur la figure 5, l'ensemble palpeur désigné par P est monté sur la machine à reproduire les clés par l'intermédiaire d'un manchon 10 isolant électriquement cet ensemble palpeur P du corps de la machine.

La tige 4 de blocage est montée par une douille 11 isolante dans un alésage de l'ensemble palpeur P et est reliée par un câble électrique 12 à une batterie électrique 13 ou autre source d'alimentation électrique et le voyant indicateur 9 lumineux, ce montage définissant un circuit électrique avec le palpeur 3, la masse de l'ensemble palpeur P portant le palpeur 3 en continuité électrique avec l'ensemble palpeur P et la masse 14 de la machine à reproduire les clés.

Lorsque la tige 4 de blocage est en contact avec la plaquette 5 et lorsque le palpeur 3 est en contact avec la partie 7a dégagée dans la clé calibre 7, le circuit électrique ainsi défini se ferme à travers la masse 14 de la machine à reproduire les clés, notamment à travers l'étau 2 côté palpeur.

Le voyant 9 s'allume en indiquant ainsi la position simultanée des contacts entre palpeur 3 et clé calibre 7, et entre tige 4 et plaquette 5.

Sur la figure 6, l'ensemble palpeur désigné par P est monté par un manchon 10 isolant sur la machine à reproduire les clés et porte le palpeur 3 et la tige 4 de blocage en continuité électrique.

La plaquette 5 de contact est isolée électriquement de la machine à reproduire les clés avec interposition d'une partie 5a électriquement isolante. Cette plaquette 5 est reliée par un câble électrique 12 à une alimentation électrique 13.

Lorsque la tige 4 de blocage est en contact avec la plaquette 5 et lorsque le palpeur 3 est en contact avec la partie 7a dégagée dans la clé calibre 7, le circuit électrique ainsi défini se ferme à travers la masse 14 de la machine à reproduire les clés, notamment à travers la plaquette 5 reliée au conducteur électrique 12 et à travers la masse 14 de la machine à reproduire les clés.

Le voyant 9 s'allume en indiquant ainsi la position simultanée des contacts entre palpeur 3 et clé calibre 7, et entre tige 4 et plaquette 5.

Sur la figure 7, l'ensemble palpeur désigné par P est monté par un manchon 10 électriquement isolant sur le corps de la machine à reproduire les clés et porte le palpeur 3 et la tige 4 de blocage en continuité électrique.

La plaquette 5 de contact est isolée électriquement de la machine à reproduire les clés par interposition d'une partie 5a électriquement isolante.

Cette plaquette 5 est reliée par un contact amovible 12a, par exemple une prise ou une pince crocodile, à un conducteur électrique 12 relié à un enroulement secondaire d'un transformateur 20 basse tension en série avec un voyant 21 indicateur et un conducteur électrique 22.

Le transformateur basse tension 20 est apte à être alimenté par l'alimentation électrique du secteur, de manière à fournir au secondaire une alimentation électrique basse tension.

Le conducteur électrique 22 est relié électriquement à la clé calibre 7 par un contact amovible 22a, par exemple par une prise ou une pince crocodile.

Lorsque la tige 4 de blocage est en contact avec la plaquette 5 et lorsque le palpeur 3 est en contact avec la partie 7a fraisée dans la clé calibre 7, le circuit électrique ainsi défini se ferme à travers la masse de l'ensemble palpeur P.

Le voyant 21 s'allume en indiquant ainsi la position simultanée des contacts entre palpeur 3 et clé calibre 7, et entre tige 4 et plaquette 5.

L'invention est particulièrement avantageuse en ce qu'elle permet d'effectuer le réglage entièrement du côté palpeur, sans risque d'interposition de limailles ou de particules métalliques pendant le réglage, contrairement aux réglages décrits dans les documents FR 2 306 043 et US 4 426 179 qui s'effectuent en tenant compte du contact électrique de la fraise et entraînent ainsi des risques de faux contacts électriques et de mauvais réglages.

L'invention est également avantageuse en ce qu'elle tient compte des ovalisation ou usure de la fraise en rotation et permet le réglage du palpeur uniquement par rapport à la profondeur effective de fraisage matérialisée par la surface 7a dégagée dans la clé calibre 7, et non simplement par rapport à une position de la fraise au repos.

L'invention décrite en référence à plusieurs modes de réalisation particuliers n'y est nullement limitée, mais couvre au contraire toutes modifications de forme et toutes variantes de réalisation dans le cadre de l'invention, comme définie dans les revendications.

## Revendications

1. Procédé de réglage d'une machine à reproduire les clés, ladite machine à reproduire les clés comportant un ensemble palpeur (P, 3-5) et un ensemble d'usinage ou de fraisage (1, 6) comportant les étapes de matérialisation (7a) de la profondeur d'usinage ou de fraisage dans une position prédéterminée de l'ensemble palpeur (P, 3-5) ; de comparaison de ladite profondeur (7a) matérialisée d'usinage ou de fraisage avec la position du palpeur (3) ; et de mise en coïncidence de la position du palpeur (3) avec cette profondeur (7a) matérialisée.

2. Procédé de réglage selon la revendication 1, **caractérisé en ce que** l'étape de matérialisation (7a) de la profondeur d'usinage ou de fraisage est réalisée sur l'étau (2) situé côté fraise par usinage ou fraisage pour constituer une clé calibre (7) présentant une partie (7a) dégagée.

3. Procédé de réglage selon la revendication 1 ou la revendication 2, **caractérisé en ce que** l'étape de comparaison de ladite profondeur (7a) matérialisée avec la position du palpeur (3) est effectuée du côté palpeur, de préférence en utilisant l'étau (2) de blocage de clé à reproduire situé côté palpeur.

4. Procédé de réglage selon l'une quelconque des revendications précédentes, **caractérisé en ce que** l'étape de mise en coïncidence de la position du palpeur (3) avec la profondeur (7a) matérialisée de fraisage ou d'usinage est effectuée avec utilisation d'un circuit électrique comportant un voyant (9, 21) lumineux indicateur de coïncidence.

5. Procédé de réglage selon l'une quelconque des revendications précédentes, **caractérisé en ce que** la position prédéterminée de l'ensemble palpeur est obtenue par mise en butée d'une tige (4) de blocage de l'ensemble palpeur (P).

6. Procédé de réglage selon la revendication 5, **caractérise en ce que** la tige (4) de blocage de l'ensemble palpeur (P) est au moins partiellement électriquement conductrice et vient en butée sur une plaquette (5) au moins partiellement électriquement conductrice ou un moyen de contact électrique équivalent.

7. Dispositif de réglage d'une machine à reproduire les clés, comportant des moyens (6) de matérialisation de la profondeur (7a) d'usinage ou de fraisage, des moyens de comparaison (3-5) de ladite profondeur matérialisée (7a) avec la position du palpeur (3) de la machine de reproduction de clés, et des moyens (8, 9, 12, 13, 20, 21, 22) de mise en coïncidence de la position du palpeur (3) avec cette profondeur (7a) matérialisée.

8. Dispositif selon la revendication 7, **caractérisé en ce que** le dispositif comporte des moyens (4, 5) de blocage en position prédéterminée de l'ensemble palpeur (P) de la machine de reproduction de clés.

9. Dispositif selon la revendication 7 ou la revendication 8, **caractérisé en ce que** le dispositif comporte des moyens (9, 21) indicateurs de la mise en coïncidence de la position du palpeur (3) avec cette profondeur (7a) matérialisée.

10. Dispositif selon la revendication 9, **caractérisé en ce que** les moyens (9, 21) indicateurs de la mise en coïncidence de la position du palpeur (3) avec cette profondeur (7a) matérialisée comportent au moins un indicateur lumineux (9, 20) déclenché par contact électrique.

## Patentansprüche

1. Verfahren zum Einstellen einer Maschine zum Reproduzieren von Schlüsseln, wobei die Maschine zum Reproduzieren von Schlüsseln eine Fühlereinheit (P, 3-5) und eine Zerspanungs- oder Fräseinheit (1, 6) aufweist und das Verfahren die Schritte umfaßt: Materialisieren (7a) der Zerspanungs- oder Frästiefe in einer vorbestimmten Stellung der Fühlereinheit (P, 3-5), Vergleichen der materialisierten Zerspanungs- oder Frästiefe (7a) mit der Stellung des Fühlers (3), und In-Koinzidenz-Bringen der Stellung des Fühlers (3) mit dieser materialisierten Tiefe (7a) bringen.

2. Einstellverfahren nach Anspruch 1, **dadurch gekennzeichnet, daß** der Schritt des Materialisierens (7a) der Zerspanungs- oder Frästiefe am frässeitig gelegenen Schraubstock (2) mittels Zerspanen oder Fräsen durchgeführt wird, um eine Schlüsselschablone (7) zu bilden, die einen freien Teil (7a) aufweist.

3. Einstellverfahren nach Anspruch 1 oder Anspruch 2, **dadurch gekennzeichnet, daß** der Schritt des Vergleichens der materialisierten Tiefe (7a) mit der Stellung des Fühlers (3) auf der Seite des Fühlers vorzugsweise unter Verwendung des Schraubstocks (2) zum Einspannen des zu reproduzierenden Schlüssels auf der Seite des Fühlers erfolgt.

4. Einstellverfahren nach einem der vorhergehenden Ansprüche, **dadurch gekennzeichnet, daß** der Schritt des In-Koinzidenz-Bringens der Stellung des Fühlers (3) mit der materialisierten Fräs- oder Zerspanungstiefe (7a) unter Verwendung einer elektrischen Schaltung durchgeführt wird, die eine die Koinzidenz anzeigende Leuchtanzeige (9, 21) aufweist.

5. Einstellverfahren nach einem der vorhergehenden Ansprüche, **dadurch gekennzeichnet, daß** die vorbestimmte Stellung der Fühlereinheit erhaften wird, indem ein Fixierstiftes (4) der Fühlereinheit (P) gegen einen Anschlag zur Anlage gebracht wird.

6. Einstellverfahren nach Anspruch 5, **dadurch gekennzeichnet, daß** der Fixierstift (4) der Fühlereinheit (P) zumindest teilweise elektrisch leitfähig ist und an einer zumindest teilweise elektrisch leitfähigen Platte (5) oder einem äquivalenten elektrischen Kontaktmittel zur Anlage kommt.

7. Vorrichtung zum Einstellen einer Maschine zum Reproduzieren von Schlüsseln, mit Mitteln (6) zum Materialisieren der Zerspanungs- oder Frästiefe (7a), mit Mitteln (3-5) zum Vergleichen der materialisierten Tiefe (7a) mit der Stellung des Fühlers (3) der Maschine zur Reproduktion von Schlüsseln und mit Mitteln (8, 9, 12, 13, 20, 21, 22), um die Stellung des Fühlers (3) mit dieser materialisierten Tiefe (7a) in Koinzidenz zu bringen.

8. Vorrichtung nach Anspruch 7, **dadurch gekennzeichnet, daß** die Vorrichtung Mittel (4, 5) zum Blockieren der Fühlereinheit (P) der Maschine zur Reproduktion von Schlüsseln in der vorbestimmten Lage umfaßt.

9. Vorrichtung nach Anspruch 7 oder Anspruch 8, **dadurch gekennzeichnet, daß** die Vorrichtung Mittel (9, 21) zur Anzeige der Koinzidenz der Stellung des Fühlers (3) mit dieser materialisierten Tiefe (7a) umfaßt.

10. Vorrichtung nach Anspruch 9, **dadurch gekennzeichnet, daß** die Mittel (9, 21) zur Anzeige der Koinzidenz der Stellung des Fühlers (3) mit dieser materialisierten Tiefe (7a) mindestens eine durch elektrischen Kontakt ausgelöste Leuchtanzeige (9, 20) umfassen.

## Claims

1. A method of adjusting a key duplicating machine, said key duplicating machine comprising a follower assembly (P, 3-5) and a machining or milling assembly (1, 6), comprising the steps of realising (7a) the machining or milling depth in a predetermined position of the follower assembly (P, 3-5); comparison of said realised machining or milling depth (7a) with the position of the follower (3); and making the position of the follower (3) coincide with this realised depth (7a).

2. An adjustment method according to Claim 1, **characterised in that** the step of realising (7a) the machining or milling depth is carried out on the vice (2) located on the milling-element side by machining or milling to produce a gauge key (7) having a cutout part (7a).

3. An adjustment method according to Claim 1 or Claim 2, **characterised in that** the step of comparing said realised depth (7a) with the position of the follower (3) is carried out on the follower side, preferably using the vice (2) for clamping the key to be duplicated located on the follower side.

4. An adjustment method according to any one of the preceding claims, **characterised in that** the step of making the position of the follower (3) coincide with the realised milling or machining depth (7a) is carried out using an electrical circuit comprising an indicator light (9, 21) indicating the coinciding.

5. An adjustment method according to any one of the preceding claims, **characterised in that** the predetermined position of the follower assembly is obtained by abutting a blocking rod (4) of the follower assembly (P).

6. An adjustment method according to Claim 5, **characterised in that** the blocking rod (4) of the follower assembly (P) is at least partially electrically conductive and buts up against an at least partially electrically conductive plate (5) or an equivalent electrical contact means.

7. A device for adjusting a key duplicating machine, comprising means (6) for realising the machining or milling depth (7a), means (3-5) for comparing said realised depth (7a) with the position of the follower (3) of the key duplicating machine, and means (8, 9, 12, 13, 20, 21, 22) for making the position of the follower (3) coincide with this realised depth (7a).

8. A device according to Claim 7, **characterised in that** the device comprises means (4, 5) for locking in a predetermined position of the follower assembly (P) of the key duplicating machine.

9. A device according to Claim 7 or Claim 8, **characterised in that** the device comprises means (9, 21) for indicating that the position of the follower (3) coincides with this realised depth (7a).

10. A device according to Claim 9, **characterised in that** the means (9, 21) indicating the coinciding of the position of the follower (3) with this realised depth (7a) comprise at least one indicator light (9, 20) triggered by electrical contact.
